# EUROPEAN PATENT APPLICATION

(11) **EP 4 838 429 A1**
(43) Date of publication of application: **11.11.2026**
(21) Application number: 24919716.1
(22) Date of filing: 30.08.2024
(51) Int. Cl.: G06N 20/00

(54) **AI MODEL TRAINING METHOD, DISTRIBUTED TRAINING SYSTEM, AND RELATED DEVICE**

(30) Priority: 23.01.2024 CN 202410100931
(71) Applicant: Huawei Technologies Co., Ltd., Shenzhen, Guangdong 518129 (CN)
(72) Inventor: CHEN, Huan, Shenzhen, Guangdong 518129 (CN); DENG, Chunmei, Shenzhen, Guangdong 518129 (CN); ZHANG, Jinnian, Shenzhen, Guangdong 518129 (CN)
(74) Representative: Huawei European IPR
(86) International application number: PCT/CN2024/115835
(87) International publication number: WO 2025/156635

(57) **Abstract**

A method for training an AI model, a distributed training system, and a related device are disclosed, and relate to the field of artificial intelligence technologies. During an N^{th} (where N is a positive integer) round of training of the AI model, a compute node stores state data in a first storage area in a memory, where the state data includes a parameter value obtained through the N^{th} round of training. During an (N+1)^{th} round of training, the compute node gradually updates the parameter value in the AI model, and stores an updated parameter value in a second storage area in the memory. When a failure occurs in this process, the compute node starts a failure storage mechanism, where the failure storage mechanism includes persistently storing the state data in the first storage area. In this way, during model training, an operation of copying the parameter value does not need to be performed in the memory, thereby avoiding impact of copying the parameter value on AI model training efficiency. After the compute node recovers from the failure, the compute node can use the persistently stored parameter value to recover the AI model and continue training. This can improve overall AI model training efficiency.

## Description

This application claims priority to Chinese Patent Application No. 202410100931.2, filed with the China National Intellectual Property Administration on January 23, 2024, and entitled "METHOD FOR TRAINING AI MODEL, DISTRIBUTED TRAINING SYSTEM, AND RELATED DEVICE", which is incorporated herein by reference in its entirety.

### TECHNICAL FIELD

This application relates to the field of artificial intelligence technologies, and in particular, to a method for training an AI model, a distributed training system, and a related device.

### BACKGROUND

With the development of artificial intelligence (Artificial Intelligence, AI) technologies, AI model training manners are diversified. Specifically, when a parameter scale of an AI model is small, a single compute node may be used to perform iterative training on the AI model. When a parameter scale of an AI model is large, an AI cluster including a plurality of compute nodes may be used to jointly train the AI model. For example, for an AI model with more than one hundred billion parameters, a dozen or dozens of compute nodes may be used to complete model training.

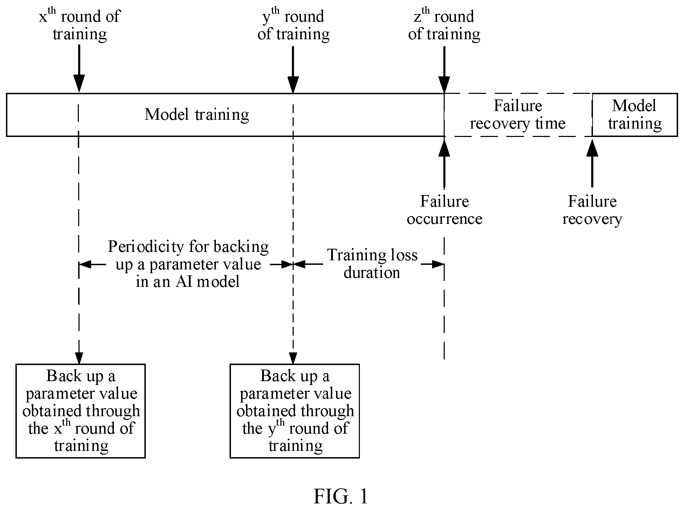

During AI model training, failures may occur on the compute nodes. For example, as a scale of the AI cluster increases, a failure rate of the AI cluster also increases proportionally. Therefore, a checkpoint (checkpoint) mechanism is usually used to train the AI model, and training recovery is performed on the AI model after the failures occur. As shown in FIG. 1, during AI model training, a parameter value in a currently trained AI model is periodically backed up. In this way, if a failure occurs during AI model training, the AI model can continue to be trained based on a latest backed-up parameter value (for example, a parameter value obtained through a y^{th} round of training in FIG. 1), and the AI model does not need to be retrained from the beginning.

However, there is usually an interval of one or more rounds of iterative training between the AI model recovered based on the backed-up parameter value and the AI model at the time of the failure. After the failure is recovered, training needs to be continued from the AI model that has undergone the y^{th} round of training. In other words, the AI model needs to be retrained from a (y+1)^{th} round to a z^{th} round. Time consumed in this process is duration lost in an entire model training process, and is referred to as training loss duration below. Therefore, the training loss duration generated after failure recovery reduces overall model training efficiency. Longer training loss duration indicates lower overall model training efficiency.

### SUMMARY

This application provides a method for training an AI model, to reduce training loss duration after failure recovery, and improve overall model training efficiency. In addition, this application further provides a distributed training system, a compute device, a computer-readable storage medium, and a computer program product.

According to a first aspect, this application provides a method for training an AI model. The method may be performed by a compute node, which is referred to as a first compute node below. For example, two rounds of iterative training are performed on the AI model, and the AI model is carried on the first compute node. During an N^{th} (where N is a positive integer) round of training of the AI model, the first compute node stores first state data of the AI model in a first storage area in a memory. The first state data includes a parameter value in the AI model obtained through the N^{th} round of training. During an (N+1)^{th} round of training of the AI model, the first compute node gradually updates the parameter value in the AI model. For example, the AI model may include a plurality of network layers. After updating a parameter value at one network layer in the AI model, the first compute node may update a parameter value at a next network layer. In addition, for a parameter value that has been updated, the first compute node does not use the parameter value to overwrite the parameter value in the first storage area, but stores the updated parameter value in a second storage area in the memory, to avoid adjusting the parameter value stored in the first storage area. In addition, when a failure occurs during the (N+1)^{th} round of training of the AI model, for example, a failure occurs on a software program participating in training of the AI model, the first compute node starts a failure storage mechanism. The failure storage mechanism includes persistently storing the first state data in the first storage area in the memory, for example, persistently storing the first state data in a local hard disk, or persistently storing the first state data in a cloud storage.

When performing iterative training on the AI model, during the N^{th} round of training and the (N+1)^{th} round of training of the AI model, the first compute node stores parameter values obtained through training in different storage areas in the memory. Therefore, during the (N+1)^{th} round of training of the AI model, if a failure occurs during updating of the parameter value, the first compute node can recover, by using the parameter value stored in the first storage area, the AI model to the AI model on which the N^{th} round of training is completed. This can effectively reduce training loss duration after the failure occurs during model training (in other words, the training loss duration is less than duration required for one round of training), thereby improving overall AI model training efficiency. When the first compute node belongs to a distributed training system, this method for training the AI model can also effectively improve availability of the distributed training system.

In addition, parameter values newly generated during two adjacent rounds of training of the AI model may be stored in different storage areas in the memory, so that the parameter values can be uniformly updated. In other words, a case in which values of a part of parameters in the AI model are updated but values of the remaining part of parameters are not updated (for example, the values are not updated due to a failure) can be avoided, thereby avoiding AI model training precision being affected by the case in which the parameter values in the AI model are not uniformly updated. In this way, it can be ensured that the AI model training precision can reach a high level. In addition, during iterative training of the AI model, parameter values obtained through different rounds of training are stored in different storage areas in the memory, and an operation of copying the parameter value does not need to be performed in the memory. This can avoid impact of copying the parameter value on efficiency of training the AI model by the first compute node.

In a possible implementation, the failure storage mechanism may further include: after the first compute node completes failure recovery, performing recovery based on the persistently stored first state data, to obtain the AI model on which the N^{th} round of training is completed, and continuing to perform the (N+1)^{th} round of training on the AI model obtained through recovery. In this way, after completing the failure recovery, the first compute node can continue to train the AI model from the (N+1)^{th} round, and does not need to train the AI model from the beginning. In addition, training loss duration generated by the failure on the first compute node can be less than duration required for one round of training, so that AI model training efficiency can be effectively improved.

In a possible implementation, the first compute node belongs to a distributed training system, and the distributed training system includes a plurality of compute nodes (and may further include at least one switching node, so that the plurality of compute nodes can communicate through the switching node). The plurality of compute nodes in the distributed training system may be used to jointly train a large AI model. Each compute node may carry a part of models in the AI model, or each compute node may carry a complete large AI model. The foregoing first compute node is a compute node in the plurality of compute nodes included in the distributed training system, and the AI model carried on the first compute node is a part or all of models in the large AI model. In this way, during joint training of the large AI model by using the plurality of compute nodes, each compute node may store, in different storage areas in the memory, parameter values generated during two adjacent rounds of training of the model. This can effectively reduce training loss duration after the failure occurs during model training, thereby improving overall AI model training efficiency and improving availability of the distributed training system.

Optionally, the first compute node may independently train the AI model, and does not need to jointly train the AI model with another compute node.

In a possible implementation, the plurality of compute nodes in the distributed training system not only include the first compute node, but also include a second compute node, and the second compute node and the first compute node are configured with the same AI model. In this case, the first compute node and the second compute node can train the AI model at a same pace, in other words, the second compute node and the first compute node can simultaneously store same state data in the memory. In this case, when a failure occurs during an (M+1)^{th} round (where M is a positive integer) of training of the AI model, the first compute node obtains second state data from the second compute node, where the second state data includes a parameter value in the AI model obtained through an M^{th} round of training. Therefore, after completing failure recovery, the first compute node can perform recovery based on the second state data obtained from the second compute node, to obtain the AI model on which the M^{th} round of training is completed, and continue to perform the (M+1)^{th} round of training on the AI model. In this way, in a data parallel distributed training scenario, in addition to implementing AI model recovery by persistently storing the state data, the first compute node may also implement the AI model recovery by obtaining the state data from another compute node. In this way, after the first compute node recovers from the failure, reliability of the AI model recovery can be improved, thereby ensuring AI model training efficiency.

In a possible implementation, the plurality of compute nodes in the distributed training system not only include the first compute node, but also include a third compute node. In this case, the AI model carried on the first compute node is a part of models in a to-be-trained large AI model, and an AI model carried on the third node is another part of models in the large AI model. In other words, the distributed training system may deploy different parts of the large AI model on different compute nodes in a model parallel manner, and each compute node is responsible for training a part of the large AI model. In this way, a computational power requirement for a single compute node can be reduced.

In a possible implementation, the failure occurring on the first compute node may be specifically a failure occurring on a software program that is on the first compute node and that participates in training of the AI model, for example, a software program running error, which consequently causes interruption of training of the AI model. Alternatively, the failure occurring on the first compute node may be a communication failure occurring on the first compute node. For example, in a data parallel training scenario, the first compute node needs to exchange a gradient with another compute node during updating of the parameter value. Therefore, when a communication function of the first compute node is abnormal, training of the AI model is interrupted.

In a possible implementation, in addition to the parameter value, the first state data stored in the memory by the first compute node may further include a momentum, and the momentum is used to update the parameter value in the AI model during the (N+1)^{th} round of training of the AI model. During actual application, when there is sufficient space of the memory of the first compute node, other data other than the parameter value in the AI model may be stored, so that subsequent recovery and training effects of the AI model can be improved.

In a possible implementation, the first compute node is an accelerator card, and the memory used by the first compute node to store the first state data is an HBM (high bandwidth memory). During actual application, the first compute node may alternatively be a CPU or a server, and the memory used to store the first state data may be another type of storage medium.

According to a second aspect, this application provides a distributed training system. The distributed training system includes a plurality of compute nodes, the plurality of compute nodes are configured to jointly train a large AI model, the plurality of compute nodes include a first compute node, and an AI model carried on the first compute node is a part or all of models in the large AI model. The first compute node is configured to: during an N^{th} round of training of the AI model, store first state data of the AI model in a first storage area in a memory, where the first state data includes a parameter value in the AI model obtained through the N^{th} round of training, the AI model is carried on the first compute node, and N is a positive integer; during an (N+1)^{th} round of training of the AI model, gradually update the parameter value in the AI model, and store an updated parameter value in a second storage area in the memory; and when a failure occurs during the (N+1)^{th} round of training of the AI model, start a failure storage mechanism, where the failure storage mechanism includes persistently storing the first state data in the first storage area in the memory.

In a possible implementation, the failure storage mechanism further includes: after the first compute node completes failure recovery, performing recovery based on the persistently stored first state data, to obtain the AI model on which the N^{th} round of training is completed, and continuing to perform the (N+1)^{th} round of training on the AI model.

In a possible implementation, the plurality of compute nodes further include a second compute node, and the second compute node and the first compute node are configured with the same AI model. The first compute node is further configured to: when a failure occurs during an (M+1)^{th} round of training of the AI model, obtain second state data from the second compute node, where the second state data includes a parameter value in the AI model obtained through an M^{th} round of training, and M is a positive integer; after the first compute node completes failure recovery, perform recovery based on the second state data, to obtain the AI model on which the M^{th} round of training is completed; and continue to perform the (M+1)^{th} round of training on the AI model.

In a possible implementation, the plurality of compute nodes further include a third compute node, the AI model carried on the first compute node is a part of models in the large AI model, and an AI model carried on the third compute node is another part of models in the large AI model.

In a possible implementation, the failure is a failure occurring on a software program that is on the first compute node and that participates in training of the AI model, or the failure is a communication failure occurring on the first compute node.

In a possible implementation, the first state data further includes a momentum, and the momentum is used to update the parameter value in the AI model during the (N+1)^{th} round of training of the AI model.

In a possible implementation, the first compute node is an accelerator card, and the memory is an HBM (high bandwidth memory).

The distributed training system provided in the second aspect corresponds to the method for training the AI model provided in the first aspect. Therefore, for technical effects of the second aspect and the implementations of the second aspect, refer to technical effects of corresponding implementations of the first aspect. Details are not described herein again.

According to a third aspect, this application provides an accelerator card. The accelerator card is configured to perform the method for training the AI model according to the foregoing first aspect or any one of the implementations of the first aspect.

According to a fourth aspect, this application provides a compute device. The compute device includes a processor and a storage. The storage is configured to store instructions, and the processor executes the instructions stored in the storage, to cause the compute device to perform the method for training the AI model according to the foregoing first aspect or any one of the implementations of the first aspect.

According to a fifth aspect, this application provides a computer-readable storage medium. The computer-readable storage medium stores instructions. When the instructions are run on a compute device, the compute device is caused to perform the operation steps of the method for training the AI model according to the foregoing first aspect or any one of the implementations of the first aspect.

According to a sixth aspect, this application provides a computer program product including instructions. When the computer program product is run on a compute device, the compute device is caused to perform the operation steps of the method for training the AI model according to the foregoing first aspect or any one of the implementations of the first aspect.

In this application, the implementations provided in the foregoing aspects may be further combined to provide more implementations.

### BRIEF DESCRIPTION OF DRAWINGS

FIG. 1 is a diagram of a structure of a distributed training system;
FIG. 2 is a diagram of a structure of an example distributed training system according to this application;
FIG. 3 is a diagram of a structure of another example distributed training system according to this application;
FIG. 4 is a schematic flowchart of a method for training an AI model according to this application;
FIG. 5 is a diagram of reducing training loss duration;
FIG. 6 is a schematic flowchart of a method for training an AI model according to this application;
FIG. 7 is a diagram of recovering model training based on persistently stored state data;
FIG. 8 is a schematic flowchart of another method for training an AI model according to this application;
FIG. 9 is a diagram of recovering model training based on state data stored in a compute node 102; and
FIG. 10 is a diagram of a hardware structure of a compute device according to this application.

### DESCRIPTION OF EMBODIMENTS

To make the foregoing objectives, features, and advantages of this application clearer and more comprehensible, the following describes various non-limiting implementations in embodiments of this application with reference to the accompanying drawings by using examples. It is clear that the described embodiments are merely a part rather than all of embodiments of this application. All other embodiments obtained based on the foregoing content in embodiments of this application shall fall within the protection scope of this application.

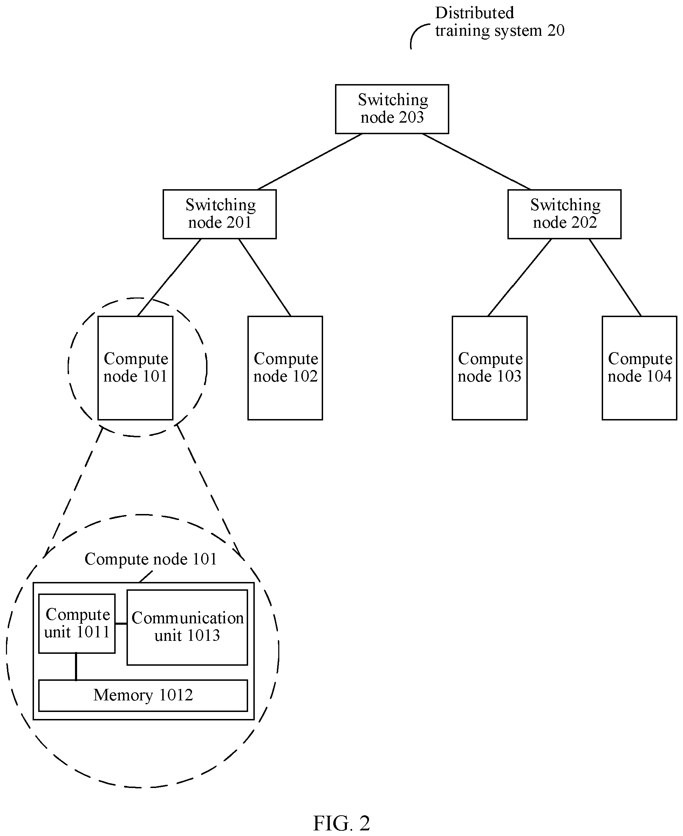

FIG. 2 is a diagram of a structure of an example distributed training system 20. As shown in FIG. 2, the distributed training system 20 may include a plurality of compute nodes. Further, the distributed training system may further include at least one switching node, and the plurality of compute nodes may be communicatively connected to the at least one switching node. For ease of understanding, in FIG. 2, an example in which four compute nodes (a compute node 101 to a compute node 104) and three switching nodes (a switching node 201 to a switching node 203) are included is used for description.

A compute node may be a node that has a model training capability. For example, the compute node may be an accelerator card. The accelerator card may be, for example, a deep learning processing unit (deep learning processing unit, DPU), a data processing unit (Data processing unit, DPU), a graphics processing unit (graphics processing unit, GPU), a neural network processing unit (neural network processing unit, NPU), or a tensor processing unit (tensor processing unit, TPU), or may be another type of accelerator card. Alternatively, the compute node may be a general-purpose processor, for example, a central processing unit (central processing unit, CPU). Alternatively, the compute node may include a compute device of a CPU and an accelerator card. A specific implementation of the compute node is not limited in this application.

In addition, each compute node is configured with a memory. For example, as shown in FIG. 2, the compute node 101 may include a memory 1012, and may further include a compute unit 1011 configured to provide computational power, and a communication unit 1013 configured to communicate with another compute node. Other compute nodes may have a same structure as the compute node 101. Details are not described herein. For example, the memory in the compute node may be, for example, a high bandwidth memory (high bandwidth memory, HBM), or may be another type of memory. This is not limited.

A switching node may be a node having a data forwarding capability, for example, may be a switch.

In the distributed training system 20, the plurality of compute nodes may be used to perform distributed training on a large AI model. The large AI model refers to a model with a large parameter scale, for example, a model whose parameter quantity is greater than a threshold. The threshold may be set based on a requirement of an actual application scenario. For example, the threshold may be 100,000. In this embodiment, the parameter scale of the large AI model is not limited. In different application scenarios, whether a model is a large AI model may be determined based on different thresholds. For example, an AI model may be specifically a neural network model, for example, a natural language processing model or a generative reasoning model. During actual application, the AI model may alternatively be another type of model.

In a first implementation, a quantity of parameters in the large AI model meets a preset condition. For example, the large AI model may include a parameter quantity on the order of a trillion. In this case, the distributed training system 20 may jointly train a same large AI model by using the plurality of compute nodes in a model parallel manner, and different compute nodes are configured to train different parts of the large AI model. In other words, an AI model carried on each compute node may be a part of the large AI model. For example, the large AI model is specifically a neural network model. Network layers included in the neural network model may be divided into a plurality of groups, each group includes at least one network layer, and each group may be scheduled to different compute nodes. Correspondingly, each compute node may train a part of the network layers in the large AI model. In this way, a model training task on each compute node can adapt to computational power of the compute node, so that different parts of the large AI model are trained in parallel by using the plurality of compute nodes, thereby improving training efficiency of the large AI model and reducing a computational power requirement for a single compute node.

In a second implementation, a quantity of parameters in the large AI model does not meet a preset condition. For example, the large AI model may include a parameter quantity on the order of a hundred thousand. In this case, the distributed training system 20 may train a same large AI model in parallel by using the plurality of compute nodes in a data parallel manner. To be specific, the same large AI model and different datasets may be configured on all the compute nodes, so that the plurality of compute nodes can train the same large AI model by using different datasets. During each round of training of the large AI model, each compute node may obtain a gradient obtained through training of another compute node, aggregate gradients obtained through respective training of the plurality of compute nodes, and update a model parameter based on an aggregation result, to complete one round of training of the model.

During actual application, the plurality of compute nodes in the distributed training system 20 may alternatively complete distributed training for the large AI model in another manner. For example, the first implementation and the second implementation may be combined. This is not limited herein.

During iterative training of the large AI model, a failure may occur on the distributed training system 20. For example, software programs that are on a part of the compute nodes and that participate in training of the large AI model are abnormal, or communication connections between a part of the compute nodes and a switching node are interrupted. If a parameter value obtained through training of each compute node is periodically backed up in the distributed training system 20, periodic backup of the parameter value reduces efficiency of training the large AI model by the distributed training system 20, and when a failure occurs on the distributed training system 20, training loss duration for recovering the training of the large AI model based on the backed up parameter value also reduces the efficiency of training the large AI model by the distributed training system 20.

Based on this, in the distributed training system 20 shown in FIG. 2, during training of the AI model, each compute node can store, in different storage areas in the memory, parameter values obtained through different rounds of training. The AI model carried on each compute node may be a part or all of models in a to-be-trained large AI model. Specifically, the compute node 101 is used as an example. During an N^{th} round of training of an AI model carried on the compute node 101, the compute node 101 may store, in a storage area A in the memory 1012, a parameter value in the AI model obtained through training, where N is a positive integer. Then, the compute node 101 continues to perform an (N+1)^{th} round of training on the AI model. In this process, the compute node 101 may gradually update the parameter value in the AI model. In addition, for a parameter value that has been updated, the compute node 101 does not store the updated parameter value in the storage area A (in other words, does not replace the parameter value before the update with the updated parameter value in the storage area A), but stores the updated parameter value in a storage area B in the memory 1012. In other words, different values of parameters in the AI model before and after the update are respectively stored in different storage areas in the memory 1012. In this way, when a failure occurs during the (N+1)^{th} round of training of the AI model and gradual updating of the parameter value, the compute node 101 can persistently store the parameter value stored in the storage area A, to subsequently recover the AI model based on the parameter value, to be specific, recover the AI model to a state obtained through the N^{th} round of training. In this way, training loss duration caused by the failure during model training can be effectively reduced. Specifically, the training loss duration can be controlled within a range less than duration required for one round of training of the AI model. For example, the training loss duration is controlled within a range of several seconds or dozens of seconds, to improve overall model training efficiency.

In addition, reducing the training loss duration can also effectively improve availability of the distributed training system 20. The availability of the distributed training system 20 may be obtained through calculation by using the following formula (1). $Availability = \left(MTBF-{T}_{training loss}\right) / \left(MTBF+MTTR\right)$ Formula (1)

In the formula, "availability" refers to the availability of the distributed training system 20; "MTBF" refers to mean time between failures (mean time between failures, MTBF), to be specific, a mean time interval between two adjacent failures in the distributed training system 20; "T_{training loss}" refers to mean training loss duration, and a value of T_{training loss} may be one half of a maximum value of the training loss duration; and "MTTR" refers to mean time to recovery (mean time to recovery, MTTR), to be specific, a mean value of time required for recovering from failures in the distributed training system 20. As shown in the formula (1), smaller T_{training loss} indicates larger availability. Therefore, the availability of the distributed training system 20 can be effectively improved by reducing the training loss duration in the distributed training system 20.

Further, the compute node 101 may alternately store, in the storage area A and the storage area B in the memory 1012, updated parameter values generated during iterative training. For example, during an (N+2)^{th} round of training of the AI model, the compute node 101 may write a newly generated parameter value into the storage area A. To be specific, after the parameter value obtained through the (N+1)^{th} round of training has been successfully stored in the storage area B, the parameter value obtained through the (N+2)^{th} round of training overwrites the parameter value that is stored in the storage area A and that is obtained through the N^{th} round of training. The rest may be deduced by analogy, until the compute node 101 completes AI model training.

In addition, during each round of training of the AI model, the compute node 101 can uniformly update the parameter values in the AI model. To be specific, in the AI model finally obtained by the compute node 101 through training, a case in which a part of parameter values are updated and other parameter values are not updated due to a failure can be avoided. In an actual application scenario, if during a part of rounds of training of the model, only a part of parameter values in the AI model are updated, and other parameter values are not updated, because updates of the parameter values in the AI model affect each other, the parameter values that are not updated causes unexpected impact during subsequent iterative training. For example, the AI model cannot be converged, or AI model training precision is low. Therefore, the compute node 101 recovers the AI model based on the parameter value stored in the storage area A, so that it can be ensured that the parameter value can be updated in a unified manner during each round of training, and it can be ensured that the AI model training precision can reach a high level.

In addition, during iterative training of the AI model, the compute node 101 stores, in different storage areas in the memory 1012, the parameter values obtained through different rounds of training, and an operation of copying the parameter value does not need to be performed in the memory 1012. This can avoid impact of copying the parameter value on efficiency of training the AI model by the compute node 101.

During actual application, during training of the large AI model with a large parameter quantity (for example, a parameter quantity on the order of a trillion), utilization of the memory 1012 in the compute node 101 is usually small, for example, does not reach 50%. Therefore, existing storage space in the memory 1012 can also support the compute node 101 in storing parameter values respectively obtained through two (or more than two) rounds of training, and there is no additional hardware requirement for the distributed training system 20.

It may be understood that the foregoing describes the process of training the AI model by the compute node 101. For another compute node in the distributed training system 20, the AI model may also be trained and recovered (after a failure occurs) in a manner similar to the foregoing manner. Details are not described herein again.

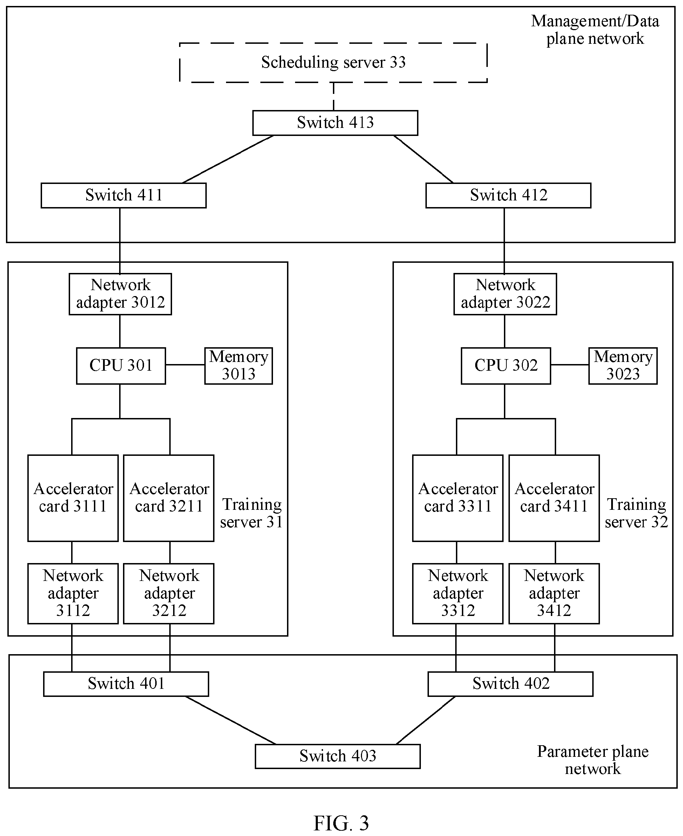

In an example, the distributed training system 20 shown in the foregoing FIG. 2 may be used in a training scenario shown in FIG. 3.

As shown in FIG. 3, the compute node in the distributed training system 20 may specifically be an accelerator card in a training server. For example, the compute node 101 may be an accelerator card 3111 in a training server 31. The switching node may specifically be a switch. For example, the switching node 201 may be a switch 401.

As shown in FIG. 3, in addition to accelerator cards, each training server may further include a CPU. For example, the training server 31 includes a CPU 301. The CPU can manage the accelerator card, for example, may control the accelerator card to start or end training of an AI model. The CPU in the training server may be configured with a memory and a network adapter. As shown in FIG. 3, the CPU 301 may be configured with a network adapter 3012 and a memory 3013.

The CPU in the training server may receive, via the network adapter, a dataset delivered by a data plane network shown in FIG. 3, and provide the dataset for the accelerator card. The dataset is used to train the AI model on the accelerator cards. Different accelerator cards may obtain a same dataset or different datasets. In addition, the CPU may further receive, via the network adapter, a control command delivered by a management plane network shown in FIG. 3, for example, may receive a control command delivered by a scheduling server 33 in the management plane network, to instruct, based on the control command, the accelerator card to start a training process for the AI model. Therefore, each accelerator card can perform, by using the dataset forwarded by the CPU, iterative training on the AI model deployed on the accelerator card.

Further, if a plurality of accelerator cards train a same AI model in parallel, during each round of iterative training, each accelerator card may obtain, via the network adapter and a parameter plane network shown in FIG. 3, a parameter value obtained through training by another accelerator card, aggregate parameter values obtained through training by the plurality of accelerator cards, then send an aggregation result to the another accelerator card via the parameter plane network, and perform gradient synchronization with the another accelerator card, to implement a synchronous update of parameter values in the same AI model on the plurality of accelerator cards. During actual application, accelerator cards located in a same training server may communicate with each other via the parameter plane network, or may communicate with each other via an internal bus. This is not limited.

Alternatively, when a plurality of accelerator cards train a same AI model in parallel, during each round of iterative training, each accelerator card may send a parameter value obtained through training to a parameter plane network. In this way, a switch (for example, a switch 403) in the parameter plane network can aggregate parameter values obtained through training by the plurality of accelerator cards, and then send an aggregation result to each accelerator card (that is, in-network computing), to implement a synchronous update of parameter values in the AI model on the plurality of accelerator cards.

During actual application, the management plane network, the data plane network, and the parameter plane network shown in FIG. 3 may share a same network, or may be implemented by using independent networks. In FIG. 3, an example in which the management plane network and the data plane network share a same network and the parameter plane network uses a single network is used for description. This is not limited herein.

It should be noted that, in addition to the foregoing training scenario shown in the FIG. 3, the distributed training system 20 shown in FIG. 2 may also be used in another training scenario. For example, in another possible training scenario, the compute node in the distributed training system 20 shown in FIG. 2 may be a CPU in a training server, so that a plurality of CPUs perform distributed training on the AI model.

In addition, with reference to FIG. 2 and FIG. 3, the foregoing describes the process of performing distributed training on the AI model. In another application scenario, one AI model may be trained by using a single compute node (where a parameter quantity of the AI model may be on the order of a hundred thousand or the like). In addition, during iterative training of the AI model, the compute node may alternately store, in different storage areas in a memory, parameter values generated during a plurality of rounds of training, and persistently store the parameter values in the memory after a failure occurs, to facilitate subsequent recovery of the AI model.

For ease of understanding, the following describes an embodiment of a method for training an AI model provided in this application with reference to the accompanying drawings.

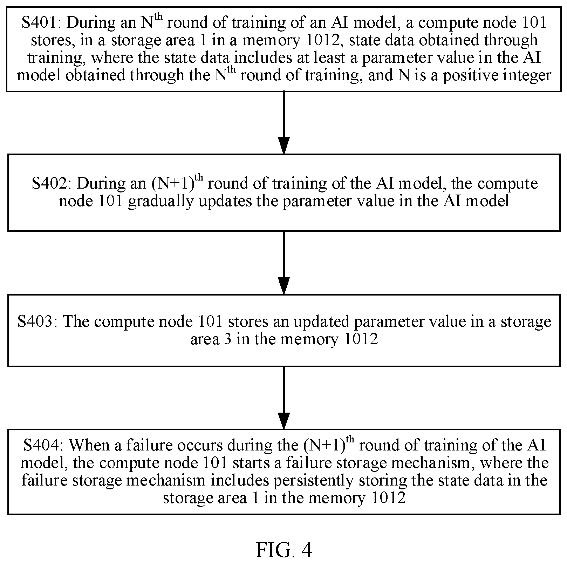

FIG. 4 is a schematic flowchart of a method for training an AI model according to an embodiment of this application. The method may be applied to the distributed training system shown in FIG. 2 or FIG. 3, or may be applied to another applicable distributed training system. For ease of description, in this embodiment, an example in which the method is applied to the distributed training system 20 shown in FIG. 2 is used, to describe a process in which a compute node 101 performs iterative training on the AI model.

As shown in FIG. 4, the method for training the model may specifically include the following steps.

S401: During an N^{th} round of training of the AI model, the compute node 101 stores, in a storage area 1 in a memory 1012, state data obtained through training, where the state data includes at least a parameter value in the AI model obtained through the N^{th} round of training, and N is a positive integer.

In this embodiment, a plurality of compute nodes in the distributed training system 20 may jointly train a same large AI model. In this case, the AI model trained by the compute node 101 may be a complete large AI model (where for example, the large AI model includes a small quantity of parameters). The distributed training system 20 may train the large AI model in a data parallel manner. To be specific, the compute node 101 and a compute node 104 may be deployed with the same AI model, and an AI model on each compute node is a complete large AI model, so that different compute nodes can train the AI model in parallel by using different datasets. Correspondingly, during each round of training of the AI model, each compute node may update a parameter value based on an aggregation result. The aggregation result may be obtained by aggregating parameter values obtained through training by all the compute nodes. The aggregation may be performed by the compute nodes, or may be performed by a switch in a parameter plane network (that is, in-network computing). For example, the parameter plane network may be a remote direct memory access over converged Ethernet (remote direct memory access over converged Ethernet, RoCE) network, an IB network (InfiniBand network), or the like.

Alternatively, the AI model trained by the compute node 101 may be a part of models in the large AI model (where for example, the AI model includes a large quantity of parameters), for example, may be a part of network layers in the large AI model. In this case, the distributed training system 20 may train the AI model in a model parallel manner. For example, the compute node 101 is configured to train a part of models in the large AI model, the compute node 104 is configured to train another part of models in the large AI model, and different compute nodes are configured to train different parts of the AI model.

In an implementation example, during the N^{th} round of training of the AI model, the compute node 101 may input input data in a training sample 1 into the AI model, and the AI model performs inference based on the input data, to obtain a corresponding inference result. Then, the compute node 101 may obtain a difference by comparing the inference result with a label (which is usually a real result) in the training sample 1. Therefore, the compute node 101 can calculate, based on the difference between the inference result and the label, a gradient used to update a parameter value in the AI model, and further correspondingly update the parameter value based on the gradient, to complete a round of training for the AI model. When the AI model trained by the compute node 101 is a complete model, each time the compute node 101 updates a parameter value, the compute node 101 may first perform aggregation based on gradients respectively calculated by the plurality of compute nodes, to obtain a gradient aggregation result, and then update the parameter value based on the gradient aggregation result.

Usually, during training of the AI model, the compute node 101 stores generated data in the memory 1012, where the generated data may include an activation value, a parameter value, a gradient, a momentum (momentum), and the like. The activation value refers to an output value generated by a network layer in the AI model based on an input. The parameter value refers to a value of a model parameter during training of the AI model, for example, a weight. During each round of training, a value of the model parameter is updated. Each parameter value may be 16-bit binary floating-point precision (FP16), or may be 32-bit binary floating-point precision (FP32). The gradient refers to a gradient used to update the value of the model parameter, and can indicate a change amplitude of the value of the model parameter in a direction. The momentum refers to a value used to adjust a gradient change, and can adjust, based on a gradient value previously used to update a parameter value, a gradient value used to update a current parameter value, to improve stability of model training. For example, the momentum in the AI model may include a first-order momentum, a second-order momentum, and the like. This is not limited herein.

In a possible implementation, the memory 1012 may include three storage areas: the storage area 1, a storage area 2, and a storage area 3. During each round of training of the AI model, the compute node 101 may store state data in the generated data in the storage area 1, and store other data in the storage area 2. The state data refers to data that can indicate a status of the AI model, or data that can be used to recover the AI model.

For example, the state data may be a parameter value, and is specifically the parameter value in the AI model on which the N^{th} round of training is completed. Correspondingly, the other data stored in the storage area 2 may include data such as the momentum (for example, the first-order momentum and the second-order momentum), and an activation value and a gradient that are generated during the N^{th} round of training. In another example, in addition to the parameter value, the state data may further include other data that can be used to recover the status of the AI model. For example, the state data may include the parameter value, the momentum, and the like. In this case, the data stored in the storage area 2 includes the activation value and the gradient.

In actual application, when storage space in the memory 1012 is large enough (for example, greater than a threshold), the state data stored in the storage area 1 by the compute node 101 may include other data (for example, the momentum) in addition to the parameter value. However, when storage space in the memory 1012 is small (for example, less than a threshold), the state data stored in the storage area 1 by the compute node 101 may include only the parameter value. Alternatively, when storage space in the memory 1012 is large enough, during model training, the compute node 101 may generate a high-precision parameter value, for example, a parameter value of 32-bit floating-point precision. Correspondingly, the compute node 101 may store the high-precision parameter value in the storage area 1. However, when storage space in the memory 1012 is small, the compute node 101 may generate a low-precision parameter value based on a high-precision parameter value, for example, a parameter value of 16-bit floating-point precision, and store the low-precision parameter value in the storage area 1, to reduce memory resources that need to be occupied for storing the parameter value.

S402: During an (N+1)^{th} round of training of the AI model, the compute node 101 gradually updates the parameter value in the AI model.

Usually, after completing the N^{th} round of training of the model, the compute node 101 may determine whether the AI model meets a model training termination condition, for example, determine whether a quantity of iterative training times of the AI model reaches a preset quantity of times, or determine whether the AI model is converged. When the model training termination condition is not met, the compute node 101 may continue to perform a next round of training, that is, the (N+1)^{th} round of training, on the AI model.

Similar to the N^{th} round of training of the AI model, during the (N+1)^{th} round of training, the compute node 101 may input input data in a training sample 2 into the AI model, the AI model performs inference based on the input data, to obtain a corresponding inference result, and obtains a difference by comparing the inference result with a label in the training sample 2. Therefore, the compute node 101 can calculate, based on the difference between the inference result and the label, a gradient used to update a parameter value in the AI model, and further correspondingly update the parameter value based on the gradient. In this embodiment, it is assumed that a part of parameter values have been updated currently, and a model parameter that has been updated is a first model parameter described in step S402.

For a plurality of parameters in the AI model, the compute node 101 may gradually update values of the plurality of parameters. For example, when the AI model is specifically a neural network model, the AI model may include K network layers, and K is a positive integer greater than 1. Each network layer may include a plurality of parameters. In this case, when updating a parameter value in the AI model, the compute node 101 may first update parameter values at a K^{th} network layer; and after updating all the parameter values at the K^{th} network layer, update parameter values at a (K-1)^{th} network layer; and then update parameter values at a (K-2)^{th} network layer. The rest may be deduced by analogy, until parameter values at a 1^{st} network layer are updated.

S403: The compute node 101 stores an updated parameter value in the storage area 3 in the memory 1012.

In this embodiment, during updating of a parameter value in the AI model, the compute node 101 does not replace, with an updated parameter value, the parameter value before the update that is stored in the storage area 1, but stores the updated parameter value in a new storage area (that is, the storage area 3) included in the memory 1012, to avoid overwriting the parameter value obtained through the N^{th} round of training of the model. In this way, even if a failure occurs during the (N+1)^{th} round of updating of the model parameter value, parameter values stored in the storage area 1 in the memory 1012 are all parameter values in the AI model obtained through the N^{th} round of training, and a case in which a part of the parameter values are values obtained through the N^{th} round of training of the model, and another part of the parameter values are updated values generated through the (N+1)^{th} round of training of the model does not occur.

For data such as an activation value and a gradient, the compute node 101 may store, during the (N+1)^{th} round of training, newly generated data such as an activation value and a gradient in the storage area 2. Specifically, the compute node 101 replaces an old activation value and gradient data in the storage area 2 with the newly generated activation value and gradient data.

S404: When a failure occurs during the (N+1)^{th} round of training of the AI model, the compute node 101 starts a failure storage mechanism, where the failure storage mechanism includes persistently storing the state data in the storage area 1 in the memory 1012.

During actual application, a failure is inevitable during training of the AI model. For example, training of the AI model is interrupted due to a program running error of the compute node 101, or training of the AI model is interrupted due to a communication function exception of the compute node 101 (in a data parallel scenario). During updating of parameter values in the AI model, if a failure occurs when the compute node 101 completes updating a part of the parameter values and continues to update the remaining part of the parameter values, the (N+1)^{th} round of training of the model fails. In this case, because a complete model parameter value (which may further include other data such as the momentum) generated through the N^{th} round of training of the AI model is stored in the storage area 1, the compute node 101 may start the failure storage mechanism, to persistently store the state data in the storage area 1 in the memory 1012, so as to subsequently recover, based on the persistently stored state data, the currently trained AI model to the AI model obtained through the N^{th} round of training. During actual application, after starting the failure storage mechanism, the compute node 101 may further persistently store other data, for example, data such as the activation value and the gradient in the storage area 2; or may persistently store a file of the AI model. This is not limited herein.

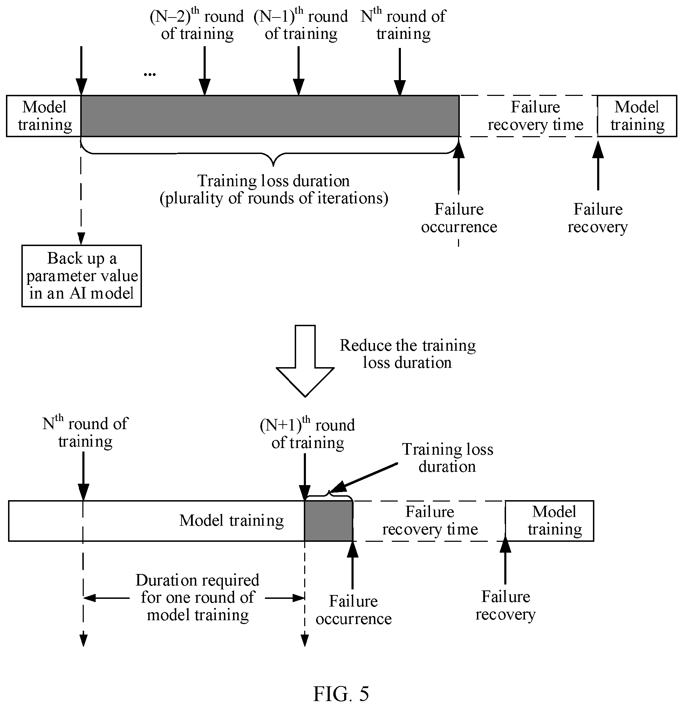

In this way, after completing failure recovery, the compute node 101 may perform the (N+1)^{th} round of training on the AI model again based on the persistently stored state data. In this way, when a failure occurs during a specific round of training of the model, the compute node 101 may continue to train the AI model from this round. In this way, training loss duration caused by the failure can be controlled within a range less than duration required for one round of training of the AI model, as shown in FIG. 5. During actual application, the training loss duration can be reduced to a range of dozens of seconds or even several seconds, to improve overall AI model training efficiency and improve availability of the distributed training system 20 by effectively reducing the training loss duration.

For example, when a failure occurs, the compute node 101 may persistently store the state data in the storage area 1 in a local hard disk of the compute node 101, or persistently store the state data in a cloud storage mounted to the compute node 101. Correspondingly, after failure recovery, the compute node 101 may obtain the state data from the local hard disk or the cloud storage, and recover, based on the state data, the AI model to the AI model on which the N^{th} round of training is completed, so that the compute node 101 can continue to perform the (N+1)^{th} round of training on the AI model.

Further, when the AI model trained by the compute node 101 is a complete model in the large AI model that needs to be trained by the distributed training system 20, the plurality of compute nodes (including the compute node 101) train the same AI model in parallel, and store same state data in a memory during each round of training of the AI model. Therefore, after the failure recovery, in addition to recovering the AI model based on the state data persistently stored in the local hard disk or the cloud storage, the compute node 101 can also obtain the state data by accessing a memory of another compute node, and recover, based on the state data in the memory of the another compute node, the AI model on the compute node 101 to the AI model on which the N^{th} round of training is completed, so that the compute node 101 can continue to perform the (N+1)^{th} round of training on the AI model. In addition, because the plurality of compute nodes perform synchronous training on the AI model, other compute nodes other than the compute node 101 can also recover, based on state data stored in respective memories, the AI model to the AI model on which the N^{th} round of training is completed, so that the plurality of compute nodes can continue to perform the (N+1)^{th} round of training on the AI model.

The plurality of compute nodes in the distributed training system 20 may train the AI model under management and control of a scheduling server (for example, the scheduling server 33 shown in FIG. 3). Specifically, before the failure occurs on the compute node 101, the scheduling server may separately send a control command to each compute node, to control each compute node to train the model. In addition, the scheduling server may sense that a failure occurs on the AI model. For example, the compute node 101 may send failure indication information to a scheduler when the failure occurs, or the scheduling server receives no heartbeat message sent by the compute node 101 for a long time. In this case, after the compute node 101 completes the failure recovery, the scheduling server can send a new control command to the compute node 101 (and another compute node), to instruct the compute node 101 (and the another compute node) to recover training on the AI model.

In this embodiment, a process of two rounds of training for the AI model is used as an example for description. During training before the N^{th} round of training for the AI model, and during training after the (N+1)^{th} round of training for the AI model, state data generated in a previous round of training and model state data generated in a current round of training may also be stored in different storage areas in the memory 1012 with reference to the foregoing similar manner, so that when a failure occurs on the compute node 101, the AI model can be recovered to the AI model on which the previous round of training is completed.

For example, because storage space of the memory 1012 is usually limited, it is difficult to support the compute node 101 in storing, in an independent storage area, state data generated during each round of training of the AI model. Therefore, the compute node 101 can alternately store, in the storage area 1 and the storage area 3, state data generated during two adjacent rounds of training of the model. For example, during the N^{th} round of training, the compute node 101 may store state data in the storage area 1; during the (N+1)^{th} round of training, the compute node 101 may store new state data in the storage area 3; and during an (N+2)^{th} round of trainings, the compute node 101 stores new state data in the storage area 1 again, in other words, overwrites the state data generated during the N^{th} round of training by using the state data generated during the (N+2)^{th} round of training.

In addition, an occasion at which the failure occurs on the compute node 101 is not limited to the foregoing updating of a second parameter value. For example, when the failure occurs on the compute node 101 before a first parameter value is updated, the compute node 101 may also recover training of the AI model based on the state data stored in the storage area 1.

In the embodiment shown in the foregoing FIG. 4, the AI model trained by the compute node 101 is a part of the complete large AI model, for example, a part of the network layers. Alternatively, the AI model trained by the compute node 101 may be a complete large AI model, that is, different compute nodes train the same large AI model by using different training samples. The following describes the two training scenarios by using examples with reference to the accompanying drawings.

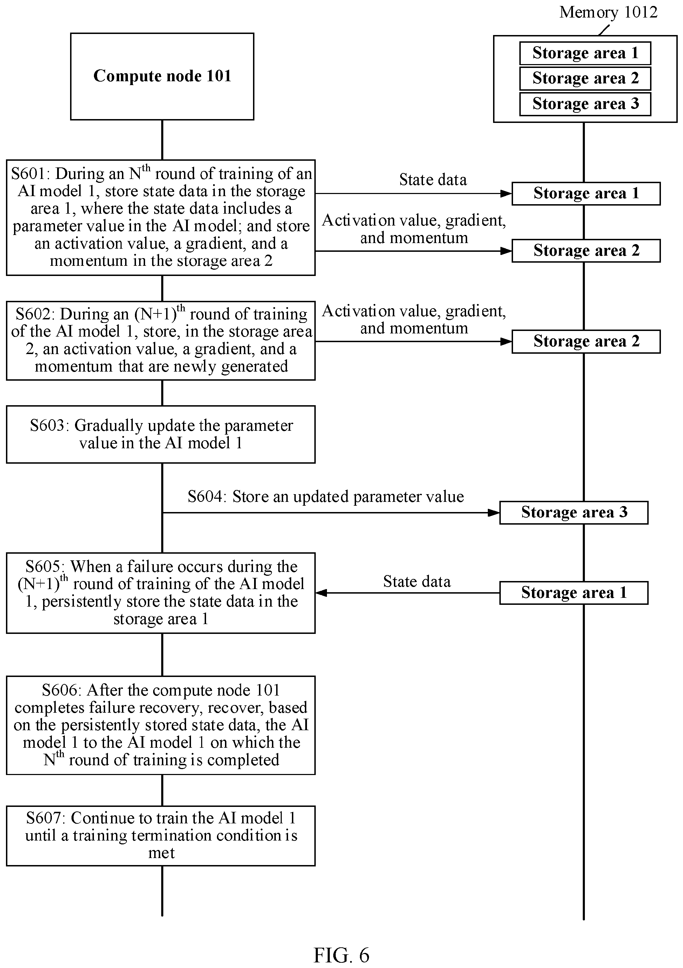

FIG. 6 is a schematic flowchart of a method for training an AI model. In the embodiment shown in FIG. 6, a large AI model that needs to be trained in a distributed training system 20 includes four AI models, which are respectively an AI model 1, an AI model 2, an AI model 3, and an AI model 4. In addition, the four AI models are respectively trained by a compute node 101 to a compute node 104, and each compute node is configured to train one AI model. Different AI models may be different parts of the large AI model.

For example, the compute node 101 trains the AI model 1. As shown in FIG. 6, the method may specifically include the following steps.

S601: During an N^{th} round of training of the AI model 1, the compute node 101 stores, in a storage area 1 in a memory 1012, state data obtained through training, where the state data includes a parameter value; and stores, in a storage area 2 in the memory 1012, an activation value, a gradient, and a momentum that are generated in model training.

S602: During an (N+1)^{th} round of training of the AI model 1, the compute node 101 stores, in the storage area 2, an activation value, a gradient, and a momentum that are newly generated.

S603: The compute node 101 gradually updates the parameter value in the AI model 1.

S604: The compute node 101 stores an updated parameter value in a storage area 3.

For a specific implementation process of step S601 to step S604, refer to related descriptions of step S401 to step S403 in the embodiment shown in the foregoing FIG. 4. Details are not described herein again. In addition, during the (N+1)^{th} round of training of the AI model 1, the compute node 101 may perform operations of storing the gradient in the storage area 2 and storing the updated parameter value in the storage area 3 in parallel.

S605: When a failure occurs during the (N+1)^{th} round of training of the AI model 1, the compute node 101 persistently stores the state data in the storage area 1.

In this embodiment, when a failure occurs in a process of gradually updating the parameter value in the AI model, the compute node 101 may start a failure storage mechanism. The failure storage mechanism may include persistently storing the state data in the storage area 1, and may further include that after completing failure recovery, the compute node 101 continues to perform iterative training on the AI model obtained through the N^{th} round of training.

For example, the failure that occurs on the compute node 101 may be, for example, a failure that occurs in program code run on the compute node 101 to train the AI model.

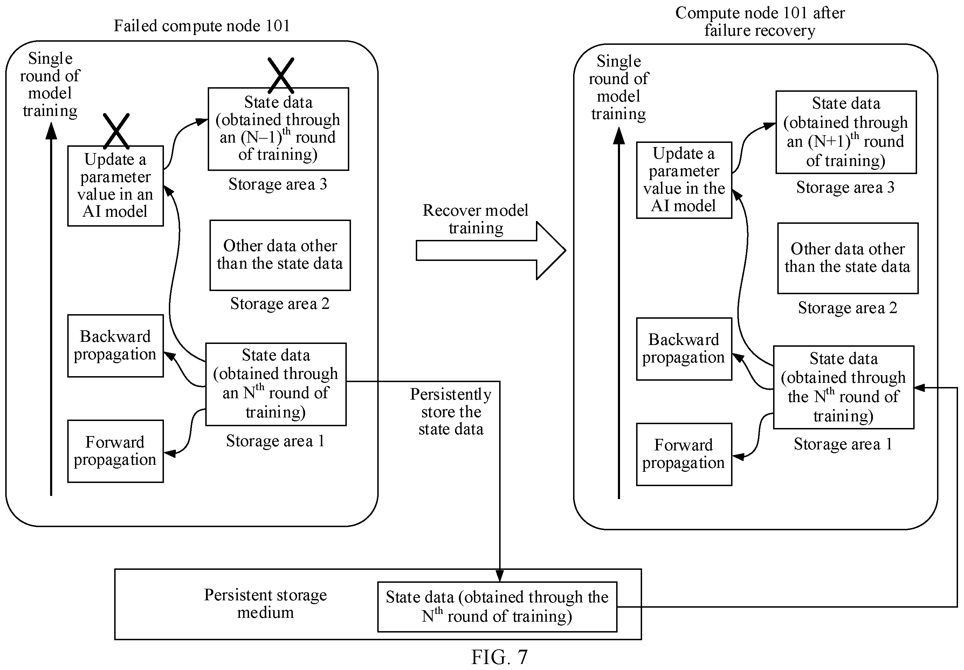

As shown in FIG. 7, a compute node 101 may back up state data in a storage area 1 to a persistent storage medium, and the state data may be used as a checkpoint (checkpoint) used during recovery of training of the model.

S606: After the compute node 101 completes the failure recovery, the compute node 101 may recover, based on the persistently stored state data, the AI model 1 to the AI model 1 on which the N^{th} round of training is completed.

For example, the compute node 101 may complete the failure recovery by executing a preset failure processing policy. For example, the compute node 101 may complete the failure recovery by restarting the compute node 101. Alternatively, the compute node 101 may complete the failure recovery under an operations and maintenance operation of operations and maintenance personnel. For example, the operations and maintenance personnel may upgrade software of the compute node 101, so that the compute node 101 recovers a normal model training function by running upgraded software.

As shown in FIG. 7, the compute node 101 may read the state data stored in the persistent storage medium to a memory 1012, for example, may read the state data to the storage area 1, so that the compute node 101 can recover, by using the state data in the storage area 1, an AI model 1 to an AI model 1 on which an N^{th} round of training is completed. In addition, when an (N+1)^{th} round of training continues to be performed on the AI model 1, and when a parameter in the AI model 1 is updated, a gradient used to update the parameter may be calculated by using a momentum in the state data, to update a parameter value based on the calculated gradient.

Further, when the (N+1)^{th} round of training continues to be performed on the AI model 1, newly generated state data (including a newly generated parameter value and a new momentum) may be stored in a storage area 3 in the memory 1012.

S607: The compute node 101 continues to train the AI model 1 until a training termination condition is met.

For example, the training termination condition may be, for example, that a quantity of iterative training times of the AI model 1 meets a preset quantity of times, or may be that the AI model 1 is in a converged state. This is not limited.

Similarly, for a process in which a compute node 102 to the compute node 104 respectively train the AI model, refer to the foregoing related descriptions of training the AI model 1 by the compute node 101. Details are not described herein again.

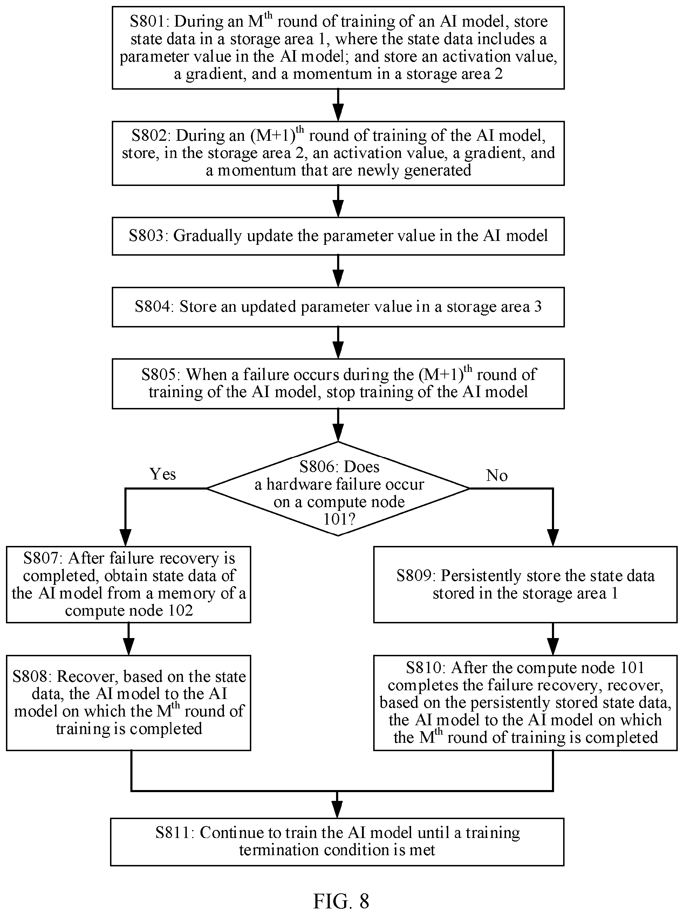

FIG. 8 is a schematic flowchart of a method for training an AI model. In the embodiment shown in FIG. 8, a compute node 101 to a compute node 104 train a same AI model (that is, a large AI model that needs to be trained by a distributed training system 20) by using different training samples. In addition, during each round of training of the model, the compute node 101 aggregates parameter values obtained through training by a plurality of compute nodes, and feeds back a result obtained through aggregation to other compute nodes, so that each compute node updates a parameter of the AI model by using an aggregation set.

For example, the compute node 101 trains the AI model. As shown in FIG. 8, the method may specifically include the following steps.

S801: During an M^{th} round of training of the AI model, the compute node 101 stores, in a storage area 1 in a memory 1012, state data obtained through training, where the state data includes a parameter value in the AI model; and stores, in a storage area 2 in the memory 1012, an activation value, a gradient, and a momentum that are generated in model training, and M is a positive integer.

S802: During an (M+1)^{th} round of training of the AI model, the compute node 101 stores, in the storage area 2, an activation value, a gradient, and a momentum that are newly generated.

S803: The compute node 101 gradually updates the parameter value in the AI model.

S804: The compute node 101 stores an updated parameter value in a storage area 3.

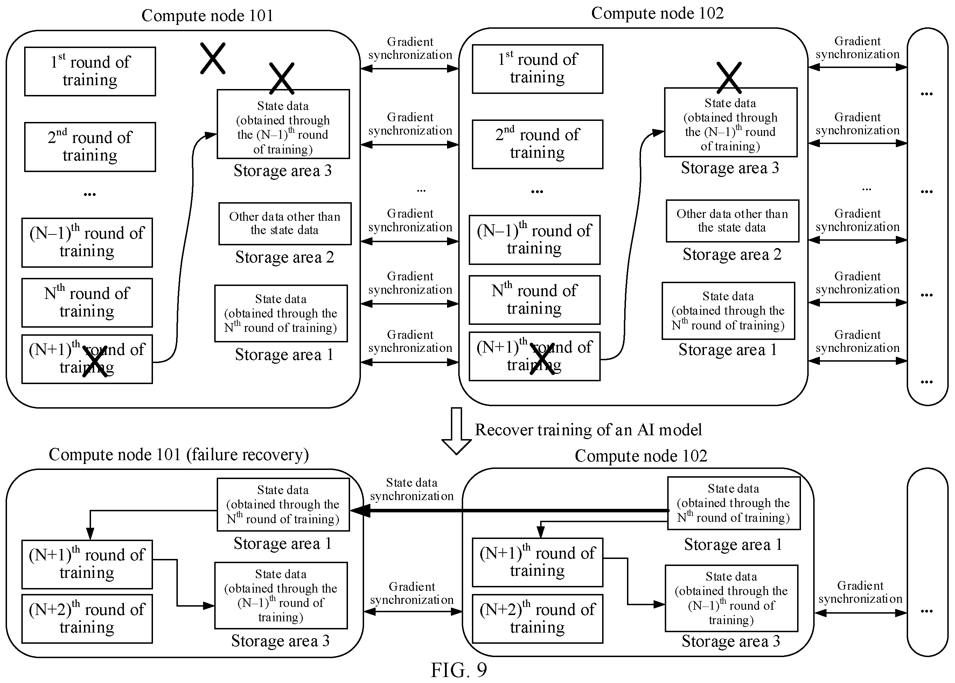

As the plurality of compute nodes 101 train the same AI model in parallel, each time when updating a first parameter value, the compute node 101 first completes gradient synchronization with other compute nodes, that is, synchronizes a gradient used to update the first parameter value to the other compute nodes. After the gradient synchronization is completed, each compute node (including the compute node 101) updates the first parameter value by using the gradient, as shown in FIG. 9.

S805: When a failure occurs during the (M+1)^{th} round of training of the AI model, the compute node 101 stops training of the AI model.

Usually, as a pace of training the AI model by the other compute nodes is consistent with a pace of training the AI model by the compute node 101, when the failure occurs on the compute node 101 and training of the AI model stops, the other compute nodes may also suspend the training process on the AI model, so that model training of the distributed training system 20 is suspended, as shown in FIG. 9.

S806: The compute node 101 determines whether a hardware failure occurs. If the hardware failure occurs, the compute node 101 continues to perform step S807; or if the hardware failure does not occur, the compute node 101 continues to perform step S809.

S807: After completing failure recovery, the compute node 101 obtains state data of the AI model from a memory of a compute node 102, where the state data is consistent with the state data written into the storage area 1 by the compute node 101 when the compute node 101 completes the M^{th} round of training.

The hardware failure may be, for example, a failure occurring on hardware of the compute node 101. For example, a processor, the memory, or a network adapter in the compute node 101 is physically damaged. In this case, operations and maintenance personnel can implement failure recovery on the compute node 101 in a manner of restarting the failed hardware on the compute node 101, replacing the failed hardware, or the like. As paces of training the AI model by the plurality of compute nodes are consistent, state data stored in memories by the plurality of compute nodes is usually consistent. In this way, even if the state data in the storage area 1 is lost due to the failure on the compute node 101, the compute node 101 can also obtain the state data from a memory of another compute node.

S808: The compute node 101 recovers, based on the state data, the AI model to the AI model on which the M^{th} round of training is completed. Then, the compute node 101 continues to perform step S811.

As parameter values are updated between different compute nodes in a gradient synchronization manner, when the compute node 101 recovers the AI model to the AI model on which the M^{th} round of training is completed, the other compute nodes 101 may also recover, based on the state data stored in the memories, the respectively trained AI model to the AI model on which the M^{th} round of training is completed, as shown in FIG. 9, so that each compute node can continue to train the AI model in parallel based on the same pace.

S809: The compute node 101 persistently stores the state data stored in the storage area 1.

S810: After the compute node 101 completes the failure recovery, the compute node 101 may recover, based on the persistently stored state data, the AI model to the AI model on which the M^{th} round of training is completed.

S811: The compute node 101 continues to train the AI model until a training termination condition is met.

In this embodiment, an example in which after the failure occurs on the compute node 101, the AI model is continuously trained on the compute node 101 that completes the failure recovery is used for description. In another embodiment, after a hardware failure occurs on the compute node 101, the compute node may also be replaced. For example, the operations and maintenance personnel may deploy a new compute node in the distributed training system 20, and recover training of the AI model on the replaced compute node.

It should be noted that another appropriate step combination that can be figured out by a person skilled in the art based on the content described above also falls within the protection scope of this application. In addition, a person skilled in the art should also understand that embodiments described in this specification all belong to example embodiments, and the involved actions are not necessarily required by this application.

The foregoing describes the distributed training system and the method for training the AI model provided in embodiments of this application with reference to FIG. 1 to FIG. 9. The following describes a structure of a compute device configured to implement the compute node 101 provided in embodiments of this application with reference to the accompanying drawings.

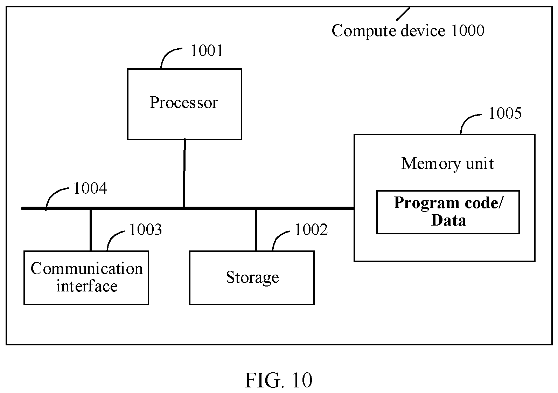

FIG. 10 is a diagram of a hardware structure of a compute device 1000. The compute device 1000 may implement, for example, the compute node 101 in the embodiment shown in the foregoing FIG. 2.

As shown in FIG. 10, the compute device 1000 includes a processor 1001, a storage 1002, and a communication interface 1003. The processor 1001, the storage 1002, and the communication interface 1003 communicate with each other through a bus 1004, or may implement communication in another manner such as wireless transmission. The storage 1002 is configured to store instructions, and the processor 1001 is configured to execute the instructions stored in the storage 1002. Further, the compute device 1000 may further include a memory unit 1005. The memory unit 1005 may be configured to cache program code, or may be configured to cache data such as the foregoing state data. The memory unit 1005 may be connected to the processor 1001, the storage medium 1002, and the communication interface 1003 through the bus 1004. The storage 1002 stores program code, and the processor 1001 may invoke the program code stored in the storage 1002 to perform the following operations:
during an N^{th} round of training of an AI model, storing, by a first compute node, first state data of the AI model in a first storage area in a memory, where the first state data includes a parameter value in the AI model obtained through the N^{th} round of training, the AI model is carried on the first compute node, and N is a positive integer;
during an (N+1)^{th} round of training of the AI model, gradually updating, by the first compute node, the parameter value in the AI model, and storing an updated parameter value in a second storage area in the memory; and
when a failure occurs during the (N+1)^{th} round of training of the AI model, starting, by the first compute node, a failure storage mechanism, where the failure storage mechanism includes persistently storing the first state data in the first storage area in the memory.

It should be understood that, in this embodiment of this application, the processor 1001 may be a CPU, or the processor 1001 may be another general-purpose processor, a digital signal processor (DSP), an application-specific integrated circuit (ASIC), a field-programmable gate array (FPGA) or another programmable logic device, a discrete gate or transistor logic device, a discrete device component, or the like. The general-purpose processor may be a microprocessor or any conventional processor or the like.

The storage 1002 may include a read-only memory and a random access memory, and provide instructions and data for the processor 1001. The storage 1002 may further include a non-volatile random access memory.

The storage 1002 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1003 is configured to communicate with another device connected to the compute device 1000. In addition to a data bus, the bus 1004 may further include a power bus, a control bus, a status signal bus, and the like. However, for clarity of description, various buses are marked as the bus 1004 in the figure.

It should be understood that the compute device 1000 according to this embodiment of this application may correspond to the method performed by the compute node 101 in the method shown in FIG. 4, FIG. 6, or FIG. 8 in embodiments of this application. The foregoing and other operations and/or functions implemented by the compute device 1000 are separately used to implement the procedures of the corresponding method in FIG. 4, FIG. 6, or FIG. 8. For brevity, details are not described herein again.

This application provides an accelerator card, where the accelerator card includes a power supply circuit and a processing circuit. The power supply circuit is configured to supply power to the processing circuit, and the processing circuit is configured to perform the method performed by the compute node 101 in the method shown in FIG. 4, FIG. 6, or FIG. 8.

An embodiment of this application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate the compute device to perform the foregoing method for training the AI model.

An embodiment of this application further provides a computer program product. The computer program product includes one or more computer instructions. When the computer instructions are loaded and executed on a compute device, the procedures or functions according to embodiments of this application are all or partially generated.

The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing methods for training the model needs to be used, the computer program product may be downloaded and executed on the compute device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable medium sets. The usable medium may be a magnetic medium (for example, a floppy disk, a hard disk, or a magnetic tape), an optical medium (for example, a DVD), or a semiconductor medium. The semiconductor medium may be a solid-state drive.

Terms used in the foregoing embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one, two, or more, and the character "/" generally indicates an "or" relationship between associated objects. In embodiments of this application, "simultaneously" refers to a case in a same time period, including a case at a same moment. In the specification, claims, and accompanying drawings of this application, the terms "first", "second", and the like are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application.

Reference to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for training an artificial intelligence AI model, wherein the method comprises:
during an N^{th} round of training of the AI model, storing, by a first compute node, first state data of the AI model in a first storage area in a memory, wherein the first state data comprises a parameter value in the AI model obtained through the N^{th} round of training, the AI model is carried on the first compute node, and N is a positive integer;
during an (N+1)^{th} round of training of the AI model, gradually updating, by the first compute node, the parameter value in the AI model, and storing an updated parameter value in a second storage area in the memory; and
when a failure occurs during the (N+1)^{th} round of training of the AI model, starting, by the first compute node, a failure storage mechanism, wherein the failure storage mechanism comprises persistently storing the first state data in the first storage area in the memory.

2. The method according to claim 1, wherein the failure storage mechanism further comprises:
after the first compute node completes failure recovery, performing recovery based on the persistently stored first state data, to obtain the AI model on which the N^{th} round of training is completed; and
continuing to perform the (N+1)^{th} round of training on the AI model.

3. The method according to claim 1 or 2, wherein the first compute node belongs to a distributed training system, the distributed training system comprises a plurality of compute nodes, the plurality of compute nodes are configured to jointly train a large AI model, the plurality of compute nodes comprise the first compute node, and the AI model is a part or all of models in the large AI model.

4. The method according to claim 3, wherein the plurality of compute nodes further comprise a second compute node, and the second compute node and the first compute node are configured with the same AI model; and
the method further comprises:
when a failure occurs during an (M+1)^{th} round of training of the AI model, obtaining, by the first compute node, second state data from the second compute node, wherein the second state data comprises a parameter value in the AI model obtained through an M^{th} round of training, and M is a positive integer;
after the first compute node completes failure recovery, performing recovery based on the second state data, to obtain the AI model on which the M^{th} round of training is completed; and
continuing, by the first compute node, to perform the (M+1)^{th} round of training on the AI model.

5. The method according to claim 3, wherein the plurality of compute nodes further comprise a third compute node, the AI model carried on the first compute node is a part of models in the large AI model, and an AI model carried on the third compute node is another part of models in the large AI model.

6. The method according to any one of claims 3 to 5, wherein the failure is a failure occurring on a software program that is on the first compute node and that participates in training of the AI model, or the failure is a communication failure occurring on the first compute node.

7. The method according to any one of claims 1 to 6, wherein the first state data further comprises a momentum, and the momentum is used to update the parameter value in the AI model during the (N+1)^{th} round of training of the AI model.

8. The method according to any one of claims 1 to 6, wherein the first compute node is an accelerator card, and the memory is a high bandwidth memory HBM.

9. A distributed training system, wherein the distributed training system comprises a plurality of compute nodes, the plurality of compute nodes are configured to jointly train a large AI model, the plurality of compute nodes comprise a first compute node, and an AI model carried on the first compute node is a part or all of models in the large AI model; and
the first compute node is configured to:
during an N^{th} round of training of the AI model, store first state data of the AI model in a first storage area in a memory, wherein the first state data comprises a parameter value in the AI model obtained through the N^{th} round of training, the AI model is carried on the first compute node, and N is a positive integer;
during an (N+1)^{th} round of training of the AI model, gradually update the parameter value in the AI model, and store an updated parameter value in a second storage area in the memory; and
when a failure occurs during the (N+1)^{th} round of training of the AI model, start a failure storage mechanism, wherein the failure storage mechanism comprises persistently storing the first state data in the first storage area in the memory.

10. The distributed training system according to claim 9, wherein the failure storage mechanism further comprises:
after the first compute node completes failure recovery, performing recovery based on the persistently stored first state data, to obtain the AI model on which the N^{th} round of training is completed; and
continuing to perform the (N+1)^{th} round of training on the AI model.

11. The distributed training system according to claim 9, wherein the plurality of compute nodes further comprise a second compute node, and the second compute node and the first compute node are configured with the same AI model; and
the first compute node is further configured to:
when a failure occurs during an (M+1)^{th} round of training of the AI model, obtain second state data from the second compute node, wherein the second state data comprises a parameter value in the AI model obtained through an M^{th} round of training, and M is a positive integer;
after the first compute node completes failure recovery, perform recovery based on the second state data, to obtain the AI model on which the M^{th} round of training is completed; and
continue to perform the (M+1)^{th} round of training on the AI model.

12. The distributed training system according to claim 9, wherein the plurality of compute nodes further comprise a third compute node, the AI model carried on the first compute node is a part of models in the large AI model, and an AI model carried on the third compute node is another part of models in the large AI model.

13. The distributed training system according to any one of claims 9 to 12, wherein the failure is a failure occurring on a software program that is on the first compute node and that participates in training of the AI model, or the failure is a communication failure occurring on the first compute node.

14. The distributed training system according to any one of claims 9 to 13, wherein the first state data further comprises a momentum, and the momentum is used to update the parameter value in the AI model during the (N+1)^{th} round of training of the AI model.

15. The distributed training system according to any one of claims 9 to 14, wherein the first compute node is an accelerator card, and the memory is a high bandwidth memory HBM.

16. An accelerator card, wherein the accelerator card is configured to perform the method according to any one of claims 1 to 8.

17. A compute device, wherein the compute device comprises a processor and a storage; and
the storage is configured to store instructions, and the processor executes the instructions stored in the storage, to cause the compute device to perform the method according to any one of claims 1 to 8.

18. A computer-readable storage medium, comprising instructions, wherein when the instructions are run on a compute device, the compute device is caused to perform the method according to any one of claims 1 to 8.

19. A computer program product comprising instructions, wherein when the computer program product is run on a compute device, the compute device is caused to perform the method according to any one of claims 1 to 8.
